# DEMANDE DE BREVET EUROPEEN

(11) **EP 1 357 657 A1**
(43) Date de publication de la demande: **29.10.2003**
(21) Numéro de dépôt: 03290964.0
(22) Date de dépôt: 17.04.2003
(51) Int. Cl.: H02H 7/085, H02H 3/38

(54) **Dispositif de commande d'arrêt d'un moteur asynchrone monophasé à condensateur**

(30) Priorité: 22.04.2002 FR 0205180
(71) Demandeur: Micrel Société Anonyme, 56700 Hennebont (FR)
(72) Inventeur: Jacob, Michel, Micrel SA, 56700 Hennebont (FR); Dutertre, Stéphane, Micrel SA, 56700 Hennebont (FR)
(74) Mandataire: Bentz, Jean-Paul

(57) **Abrégé**

L'invention concerne un dispositif de commande d'arrêt du fonctionnement d'un moteur (2) asynchrone monophasé ayant un condensateur (C), un enroulement principal (L1 ou L2) et un enroulement auxiliaire (L1 ou L2). Le dispositif comprend des moyens de mesure du déphasage (3) entre la tension (U) aux bornes du moteur et un courant (I1 ou I2) traversant l'enroulement principal (L1 ou L2) du moteur, et des moyens de commande d'arrêt (4) aptes à couper l'alimentation du moteur en cas de déphasage inférieur à une valeur seuil prédéfinie. Les moyens de mesure de déphasage comportent des moyens de détection (6,7) du passage à zéro du courant (I1 ou I2) traversant l'enroulement principal (L1 ou L2). Selon l'invention, les moyens de détection (6,7) du passage à zéro du courant (I1 ou I2) traversant l'enroulement principal consistent en un circuit comparateur (CP1 ou CP2) apte à transformer la tension aux bornes d'un shunt de courant (R1 ou R2) monté en série avec l'enroulement principal en un signal sensiblement carré dont les fronts montants et descendants correspondent à des passages à zéro dudit courant.

## Description

La présente invention concerne un dispositif de commande d'arrêt d'un moteur asynchrone monophasé à condensateur lorsque la charge sur le moteur atteint une valeur prédéterminée. Ce dispositif est destiné à la commande d'ouverture et de fermeture de volets roulants, stores, portails motorisés ou équivalents.

I1 est connu de par la demande de brevet EP 0 720 269 un dispositif de commande d'arrêt d'un moteur asynchrone monophasé à condensateur comportant des moyens de mesure du déphasage entre l'un quelconque des paramètres, tension ou courant, de la phase principale ou la phase auxiliaire du moteur et un autre de ces paramètres, et des moyens de commande d'arrêt apte à couper l'alimentation du moteur en cas de mesure d'un retard inférieur à une valeur seuil en mémoire. I1 existe en effet une relation de proportionnalité entre cette mesure de déphasage et la charge appliquée au moteur.

Le mode de réalisation plus particulièrement présenté dans ce document concerne un dispositif réalisant une mesure de déphasage entre la tension aux bornes du moteur et le courant circulant à travers l'enroulement principal de celui-ci. Des moyens de détection du passage à zéro de la tension aux bornes du moteur et du courant circulant à travers l'enroulement principal sont donc prévus dans le dispositif.

Le dispositif présenté dans ce document présente l'inconvénient majeur d'avoir un coût de revient relativement élevé. En effet, la détection du passage à zéro d'un courant est effectuée à l'aide d'un optocoupleur qui, bien que procurant une isolation galvanique entre l'alimentation secteur et l'alimentation basse tension des composants électroniques du circuit, est cependant un composant relativement cher.

Pour pallier cet inconvénient, un autre dispositif de commande d'arrêt de moteur est proposé dans la demande de brevet EP 0 999 632. Ce dispositif comporte des moyens de mesure de déphasage entre la tension d'alimentation du moteur et la tension aux bornes du condensateur du moteur. Ce dispositif présente l'avantage de ne plus nécessiter d'optocoupleur mais se révèle, en conditions de fonctionnement, moins performant qu'un dispositif avec mesure de déphasage entre un courant et une tension. I1 s'avère en effet que le déphasage entre la tension d'alimentation du moteur et la tension aux bornes du condensateur du moteur est particulièrement sensible aux conditions de fonctionnement du moteur (température du moteur, fluctuations de son alimentation électrique).

Un but de l'invention est de réaliser un dispositif de commande d'arrêt de moteur avec mesure de déphasage entre une tension et un courant qui soit tout aussi performant que celui présenté dans la demande de brevet EP 0 720 269 mais moins coûteux à mettre en oeuvre.

Aussi, l'invention concerne un dispositif de commande d'arrêt du fonctionnement d'un moteur asynchrone monophasé ayant un condensateur et des premier et second enroulements servant chacun d'enroulement principal ou auxiliaire au moteur selon le sens de rotation de ce dernier, lequel dispositif comprend des moyens de mesure du déphasage entre la tension aux bornes du moteur et un courant traversant l'enroulement principal du moteur, et des moyens de commande d'arrêt aptes à couper l'alimentation du moteur en cas de déphasage inférieur à une valeur seuil prédéfinie,
lesdits moyens de mesure de déphasage comportant des moyens de détection du passage à zéro du courant traversant l'enroulement principal,
caractérisé en ce que les moyens de détection du passage à zéro du courant traversant l'enroulement principal consistent en un circuit comparateur apte à transformer la tension aux bornes d'un shunt de courant monté en série avec l'enroulement principal en un signal sensiblement carré dont les fronts montants et descendants correspondent à des passages à zéro dudit courant.

Les moyens de mesure de déphasage comportent en outre des moyens de détection du passage à zéro de la tension aux bornes du moteur, et un microprocesseur chargé de mesurer le temps séparant le passage à zéro de la tension aux bornes du moteur et le passage à zéro du courant traversant l'enroulement principal, et de commander l'arrêt du moteur, par l'intermédiaire desdits moyens de commande d'arrêt, lorsque ledit temps mesuré est inférieur à une valeur seuil.

Dans le mode de réalisation préféré, le circuit comparateur est un amplificateur opérationnel dont les entrées sont reliées aux bornes du shunt de courant par l'intermédiaire de résistances de valeurs élevées. Ce composant électronique est beaucoup moins onéreux qu'un optocoupleur. On utilise, par ailleurs, une résistance de faible valeur, par exemple 1 Ω, comme shunt de courant.

Enfin, les moyens de commande d'arrêt consistent en deux triacs venant raccorder, lorsque l'un d'eux est commandé en fermeture, l'une ou l'autre des bornes du condensateur au secteur et assurant, lorsqu'ils sont tous les deux ouverts, l'arrêt du moteur.

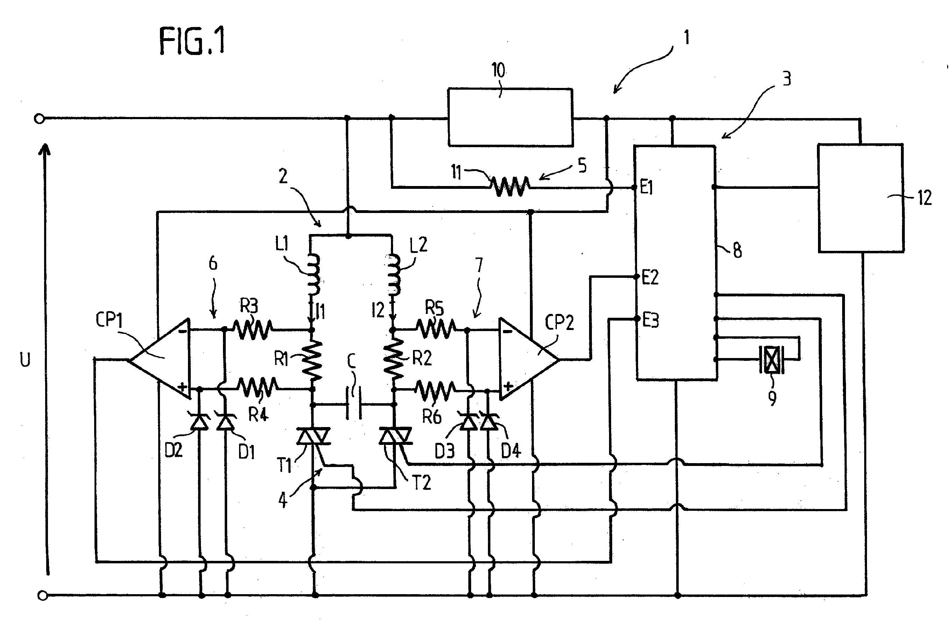

D'autres caractéristiques et avantages de l'invention apparaîtront à la lecture de la description détaillée qui suit et qui est faite en référence à la figure 1 qui représente un schéma du dispositif de commande d'arrêt selon l'invention.

La figure 1 représente le schéma d'un dispositif de commande d'arrêt 1 du fonctionnement d'un moteur asynchrone monophasé 2 muni de deux enroulements, à savoir un enroulement L1 et un enroulement L2 servant chacun d'enroulement principal ou auxiliaire au moteur selon le sens de rotation de celui-ci, et d'un condensateur de déphasage C branché entre les enroulements L1 et L2 et destiné à créer un champ tournant. Dans l'application à un volet roulant, l'enroulement principal est par exemple l'enroulement L1 lors de la montée du volet et l'enroulement L2 lors de la descente.

Le moteur 2 est alimenté par le secteur. Le dispositif de commande d'arrêt 1 est prévu pour arrêter le moteur 2 lorsque la charge appliquée sur celui-ci devient supérieure à une valeur seuil, par exemple, dans le cas de la commande d'arrêt d'un volet roulant, lorsque le tablier du volet roulant rencontre un obstacle ou lorsqu'il arrive en fin de course.

Le dispositif de commande d'arrêt 1 comprend des moyens de mesure 3 du déphasage entre la tension U aux bornes du moteur 2 (correspondant à la tension fournie par le secteur), et le courant circulant au travers de l'un ou l'autre des enroulements L1 et L2, et des moyens d'arrêt 4 du moteur. Les courants circulant à travers les enroulements L1 et L2 sont notés, respectivement, I1 et I2. Selon l'invention, on vient mesurer le déphasage entre la tension U et le courant traversant l'enroulement principal du moteur qui correspond au courant I1 lors de la montée du volet et au courant I2 lors de sa descente.

Les moyens de mesure 3 comportent des moyens de détection 5 du passage à zéro de la tension U aux bornes du moteur 2, des moyens de détection 6 du passage à zéro du courant I1, des moyens de détection 7 du passage à zéro du courant I2, et un microprocesseur 8 chargé de mesurer le déphasage entre la tension U et les courants I1 ou I2 selon le sens de rotation du moteur et de commander l'arrêt du moteur 2 à l'aide des moyens d'arrêt 4 lorsque ce déphasage est inférieur à une valeur de seuil prédéfinie.

Le microprocesseur 9 est équipé d'une horloge 9 pour mesurer le temps entre le passage à zéro de la tension U et le passage à zéro du courant I1 ou I2. Il est par ailleurs alimenté par une alimentation basse tension à courant continu 10, elle-même alimentée par le secteur.

Les moyens de détection 5 du passage à zéro de la tension U consistent en une ou plusieurs résistances chutrices 11 connectée(s) entre la borne positive du secteur et une entrée E1 du microprocesseur 8. La tension sinusoïdale du secteur est transformée, à travers cette ou ces résistance(s), en un signal sensiblement carré assimilable à un signal de commande logique. Chaque front montant ou descendant du signal carré produit correspond approximativement au passage à zéro de la tension U.

Selon l'invention, les moyens de détection 6 et 7 du passage à zéro des courants, respectivement I1 et I2, comportent tous deux un circuit comparateur, respectivement CP1 et CP2, chargé de comparer les tensions aux bornes d'un shunt de courant, respectivement R1 et R2. Dans l'exemple de la figure 1, les shunts de courant R1 et R2 sont des résistances de très faible valeur, par exemple 1 ohm, et les circuits comparateurs CP1 et CP2 sont des amplificateurs opérationnels. La résistance R1 est montée en série avec l'enroulement L1 et la résistance R2 avec l'enroulement L2. Les bornes des résistances R1 et R2 sont reliées aux entrées inverseuse et non inverseuse des circuits comparateurs, respectivement CP1 et CP2, par des résistances de valeurs élevées, respectivement R3, R4 et R5, R6. Ces dernières ont par exemple une valeur de 1 MΩ. Enfin, les sorties des comparateurs CP1 et CP2 sont connectées à des entrées, notées respectivement E2 et E3, du microprocesseur.

Les comparateurs CP1 et CP2 sont alimentés par l'alimentation basse tension 10 et délivrent des signaux représentatifs des courants traversant les résistances R1 et R2 respectivement. Les signaux délivrés ont la forme de signaux carrés dont les fronts montants et descendants correspondent à des passages à zéro du courant. Comme indiqué précédemment, ces signaux sont fournis au microprocesseur 8. Le microprocesseur 8 est alors en mesure de calculer, à partir des signaux appliqués sur ses entrées E1, E2 et E3 et à chaque alternance, le retard de I1 ou 12, selon le sens de rotation du moteur 2, sur U, de le comparer à valeur seuil prédéfinie stockée dans une mémoire 12 associée au microprocesseur 8, puis de commander l'arrêt du moteur si ce retard est inférieur à une valeur seuil.

Les moyens d'arrêt 4 du moteur comportent deux triacs T1 et T2 destinés à connecter, lorsque l'un d'eux est fermé, l'une ou l'autre des bornes du condensateur C au secteur. Les triacs T1 et T2 sont chacun associés à un sens de rotation du moteur 2. L'arrêt du moteur 2 est opéré en ouvrant les deux triacs. Leur état, ouvert ou fermé, est commandé par le microprocesseur 8.

Les moyens de détection 6 et 7 fonctionnent de la manière suivante : lorsque le triac T1, monté en série avec l'enroulement L1 et la résistance R1, est fermé, l'enroulement L1 est l'enroulement principal du moteur. Une tension de 1 volt environ apparaît aux bornes du triac, ce qui génère une tension de mode commun de 1 V environ sur les entrées du comparateur CP1. Ce dernier est donc en mesure de réjecter cette tension de mode commun tout en détectant les passages à zéro du courant I1 circulant dans l'enroulement L1 et la résistance R1. Pour une intensité maximale de courant I1 de 1 A et une résistance R1 de 1 Ω, la tension maximale obtenue aux bornes de la résistance R1 est de 1 V. Si on utilise comme comparateur CP1 un amplificateur opérationnel du type TLO 84 acceptant un courant d'entrée maximal de 10 nA, cela correspond à une tension d'erreur de 20 mV au total aux bornes des résistances R3 et R4. L'erreur maximale sur la mesure de déphasage est inférieure à 1 degré.

Pendant cet état de fonctionnement (triac T1 fermé), l'amplificateur opérationnel utilisé comme comparateur CP2 présente sur ses entrées, à travers les résistances R5 et R6, une tension de mode commun très élevée, de l'ordre de quelques centaines de volts, ce qui rend impossible toute détection d'un passage à zéro du courant I2. Par conséquent, la sortie du comparateur CP2 n'est pas exploitée lorsque le triac T1 est fermé.

A l'inverse, lorsque le triac T2 est fermé (et le triac T1 ouvert), l'enroulement L2 est l'enroulement principal du moteur. Le comparateur CP2 est alors utilisé pour détecter les passages à zéro du courant I2 et le comparateur CP1 est inutilisé.

Les passages à zéro de la tension de sortie du comparateur CP1 correspondent aux passages à zéro du courant I1 lorsque le triac T1 est fermé. De même, les passages à zéro de la tension de sortie du comparateur CP2 correspondent aux passages à zéro du courant I2 lorsque le triac T2 est fermé. Ainsi, lorsque le triac T1 est fermé, le microprocesseur 8 calcule le déphasage entre la tension U et le courant I1, et, lorsque le triac T2 est fermé, il calcule le déphasage entre la tension U et le courant I1. Lorsque ce déphasage est inférieur à une valeur seuil prédéfinie, le microprocesseur 8 commande l'arrêt du moteur 2 en ouvrant le triac jusqu'alors en position fermée.

Des diodes de protection sont avantageusement prévues sur les entrées des amplificateurs opérationnels CP1 et CP2 pour protéger ces derniers contre les surtensions, par exemple lorsque le circuit est touché par la foudre ou lorsque la tension de mode commun sur les entrées du comparateur est très élevée. Dans l'exemple de la figure 1, des diodes zener D1 et D2 sont connectées respectivement entre les entrées inverseuse et non inverseuse du comparateur CP1 et la masse. De même, des diodes zener D3 et D4 sont connectées respectivement entre les entrées inverseuse et non inverseuse du comparateur CP2 et la masse.

Au final, si on compare le dispositif d'arrêt 1 de l'invention à celui présenté dans la demande de brevet EP 0 720 269, les deux circuits comparateurs CP1, CP2 et les deux triacs T1, T2 remplacent un optocoupleur, un relais et un triac. Cette nouvelle structure du dispositif permet de réduire fortement le prix de revient du dispositif.

## Revendications

1. Dispositif de commande d'arrêt du fonctionnement d'un moteur (2) asynchrone monophasé ayant un condensateur (C) et des premier et second enroulements (L1,L2) servant chacun d'enroulement principal ou auxiliaire au moteur selon le sens de rotation de ce dernier, lequel dispositif comprend des moyens de mesure du déphasage (3) entre la tension (U) aux bornes du moteur et un courant (I1 ou I2) traversant l'enroulement principal (L1 ou L2) du moteur, et des moyens de commande d'arrêt (4) aptes à couper l'alimentation du moteur en cas de déphasage inférieur à une valeur seuil prédéfinie,
lesdits moyens de mesure de déphasage (3) comportant des moyens de détection (6,7) du passage à zéro du courant (I1 ou I2) traversant l'enroulement principal (L1 ou L2),
**caractérisé en ce que** les moyens de détection (6,7) du passage à zéro du courant (I1 ou I2) traversant l'enroulement principal (L1 ou L2) consistent en un circuit comparateur (CP1 ou CP2) apte à transformer la tension aux bornes d'un shunt de courant (R1 ou R2) monté en série avec l'enroulement principal (L1 ou L2) en un signal sensiblement carré dont les fronts montants et descendants correspondent à des passages à zéro dudit courant.

2. Dispositif de commande d'arrêt selon la revendication 1, **caractérisé en ce que** les moyens de mesure de déphasage (3) comportent en outre des moyens de détection (5) du passage à zéro de la tension (U) aux bornes du moteur, et un microprocesseur (8) chargé de mesurer le temps séparant le passage à zéro de la tension (U) aux bornes du moteur et le passage à zéro du courant (I1 ou I2) traversant l'enroulement principal (L1 ou L2), et de commander l'arrêt du moteur, par l'intermédiaire desdits moyens de commande d'arrêt (4), lorsque ledit temps mesuré est inférieur à une valeur seuil.

3. Dispositif de commande d'arrêt selon la revendication 1 ou 2, **caractérisé en ce que** le circuit comparateur (CP1 ou CP2) est un amplificateur opérationnel dont les entrées sont reliées aux bornes du shunt de courant (R1 ou R2) par l'intermédiaire de résistances (R3,R4 ou R5,R6) de valeurs élevées.

4. Dispositif de commande d'arrêt selon la revendication 2 ou 3, **caractérisé en que** le shunt de courant est une résistance de faible valeur, de l'ordre de 1 Ω.

5. Dispositif de commande d'arrêt selon l'une des revendications 2 à 4, **caractérisé en que** les moyens de détection (5) du passage à zéro de la tension (U) aux bornes du moteur consistent en une ou plusieurs résistance (11) aptes à transformer la tension (U) aux bornes du moteur (2) en un signal sensiblement carré dont les fronts montants et descendants correspondent à des passages à zéro de ladite tension (U).

6. Dispositif de commande d'arrêt selon l'une des revendications précédentes, **caractérisé en que** les moyens de commande d'arrêt (4) consistent en deux triacs (T1,T2) venant raccorder, lorsque l'un d'eux est commandé en fermeture, l'une ou l'autre des bornes du condensateur (C) au secteur et assurant, lorsqu'ils sont tous les deux ouverts, l'arrêt du moteur (2).

7. Dispositif de commande d'arrêt selon l'une quelconque des revendications 2 à 7, **caractérisé en ce que** des diodes de protection (D1,D2,D3,D4) sont prévues sur les entrées de l'amplificateur opérationnel (CP1 ou CP2) pour le protéger contre les surtensions.
